# EUROPEAN PATENT APPLICATION

(11) **EP 3 124 105 A1**
(43) Date of publication of application: **01.02.2017**
(21) Application number: 15767939.0
(22) Date of filing: 25.03.2015
(51) Int. Cl.: B01D 69/08, B01D 69/10, B01D 63/02

(54) **FILTERING APPARATUS**

(30) Priority: 28.03.2014 KR 20140036690
(71) Applicant: Kolon Industries, Inc., Gwacheon-si, Gyeonggi-do 13837 (KR)
(72) Inventor: MOON, Heewan, Yongin-si, Gyeonggi-do 446-797 (KR)
(74) Representative: Ter Meer Steinmeister & Partner
(86) International application number: PCT/KR2015/002898
(87) International publication number: WO 2015/147536

(57) **Abstract**

Disclosed is a filtering apparatus which comprises a plurality of hollow fiber membrane modules installed in a frame structure with high packing density so that the recovery rate of the filtering apparatus can be increased, and performs the aeration cleaning of the hollow fiber membrane modules in efficient way. The filtering apparatus of the invention comprises a frame structure including first and second internal spaces, a first hollow fiber membrane module installed in the first internal space, and a second hollow fiber membrane module installed in the second internal space.

## Description

### [Technical Field]

The present invention relates to a filtering apparatus, and more particularly, to a filtering apparatus which comprises a plurality of hollow fiber membrane modules installed in a frame structure with high packing density so that the recovery rate of the filtering apparatus can be increased, and performs the aeration cleaning of the hollow fiber membrane modules in efficient way.

### [Background Art]

A method for water treatment to purify a fluid by removing contaminants therefrom includes a method using a filtering membrane, a method using heat or phase-change, and so on.

A method using a filtering membrane has a lot of advantages over the method using heat or phase-change. Among the advantages is the high reliability of water treatment since the water of desired purity can be easily and stably obtained by adjusting the size of the pores of the filtering membrane. Furthermore, since the method using a filtering membrane does not require a heating process, it can be used together with microorganisms which are useful for separation process but vulnerable to heat.

Among the methods using a filtering membrane is a method using a hollow fiber membrane. Typically, a hollow fiber membrane has been widely used in the field of microfiltration for obtaining axenic water, drinking water, super pure water, and so on. Recently, the application of the hollow fiber membrane is being extended to wastewater treatment, solid-liquid separation in a septic tank, removal of suspended solid (SS) from industrial wastewater, filtration of river, filtration of industrial water, filtration of swimming pool water, and the like.

There is a submerged-type hollow fiber membrane module, a kind of the hollow fiber membrane module, which is directly submerged into a fluid to be treated and separates the solid components such as impurities or sludge by selectively allowing only the liquid to penetrate into the lumen of the hollow fiber membrane as a negative pressure is applied to the lumen.

The submerged-type hollow fiber membrane module is classified into a vertical-type and a horizontal-type. The vertical-type hollow fiber membrane module is a hollow fiber membrane module of which hollow fiber membrane, when submerged into the fluid, is arranged in such a way that its longitudinal direction is vertical to the water surface. On the other hand, the horizontal-type hollow fiber membrane module is a hollow fiber membrane module of which hollow fiber membrane, when submerged into the fluid, is arranged in such a way that its longitudinal direction is parallel with the water surface.

The horizontal-type hollow fiber membrane module is more vulnerable to pore-clogging than the vertical-type hollow fiber membrane module since the impurities in the fluid are more likely to accumulate on the hollow fiber membrane by gravity. Accordingly, while the horizontal-type hollow fiber membrane module is used mainly for treatment of water of relatively low contamination level, e.g., water treatment in a purification plant, the vertical-type hollow fiber membrane module is used mainly for treatment of water of relatively high contamination level, e.g., water treatment in a wastewater-disposal plant.

Generally, a plurality of filtering apparatuses need to be submerged in a bath containing a fluid to be treated with a certain interval therebetween so as to prevent them from colliding with each other and being damaged. Therefore, there is a limit in increasing the number of the hollow fiber membrane modules to be submerged in a fluid contained in a bath of a certain size. In other words, there is a limit in increasing the packing density of a filtering apparatus to be submerged in a fluid contained in a specific bath, and thus, there is a limit in increasing the recovery rate of the filtering apparatus.

### [Disclosure]

### [Technical Problem]

Therefore, the present invention is directed to a filtering apparatus capable of preventing these limitations and drawbacks of the related art.

An aspect of the present invention is to provide a filtering apparatus which comprises a plurality of hollow fiber membrane modules installed in a frame structure with high packing density so that the recovery rate of the filtering apparatus can be increased, and performs the aeration cleaning of the hollow fiber membrane modules in efficient way.

Additional aspects and features of the present invention will be set forth in part in the description which follows and in part will become apparent to those having ordinary skill in the art upon examination of the following or may be learned from practice of the invention.

### [Technical Solution]

In accordance with the aspect of the present invention, there is provided a filtering apparatus comprising: a frame structure including first and second internal spaces; a first hollow fiber membrane module installed in the first internal space; and a second hollow fiber membrane module installed in the second internal space, wherein each of the first and second hollow fiber membrane modules comprises: an upper header; a lower header; and a hollow fiber membrane between the upper and lower headers, the frame structure comprises: vertical members having longitudinal direction parallel with the hollow fiber membrane; and cross pipes supported by the vertical members, the cross pipes having longitudinal direction perpendicular to the upper and lower headers and the hollow fiber membrane respectively, the vertical members comprises: a pair of central vertical members; a pair of first vertical members forming the first internal space together with the central vertical members; and a pair of second vertical members forming the second internal space together with the central vertical members, the cross pipes comprises: a first central cross pipe supported by the central vertical members, the first central cross pipe being in fluid communication with the upper headers of the first and second hollow fiber membrane modules; and a second central cross pipe supported by the central vertical members, the second central cross pipe being in fluid communication with the lower headers of the first and second hollow fiber membrane modules, and each of the central vertical members is a pipe in fluid communication with at least one of the first and second central cross pipes and has an outlet port to send a permeate produced by the first and second hollow fiber membrane modules to an outside.

In accordance with another aspect of the present invention, there is provided a filtering apparatus comprising: a frame structure; a first group of hollow fiber membrane modules arranged in parallel with each other in the frame structure; and a second group of hollow fiber membrane modules arranged in parallel with each other in the frame structure, wherein the frame structure comprises a central cross pipe disposed between the first group of hollow fiber membrane modules and the second group of hollow fiber membrane modules, and the first and second groups of hollow fiber membrane modules are in communication with the central cross pipe.

Additional aspects and features of the present invention may be learned from practice of the invention.

### [Description of Drawings]

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a perspective view schematically showing the filtering apparatus according to one embodiment of the present invention;
FIG. 2 shows the way how the hollow fiber membrane module is coupled to the cross bar of the frame structure according to one embodiment of the present invention; and
FIG. 3 is a front view schematically showing the header of the hollow fiber membrane module and the cross bar of the frame structure coupled to each other.

### [Mode for Invention]

Hereinafter, the filtering apparatuses according to the various embodiments of the present invention will be described in detail with reference to the annexed drawings.

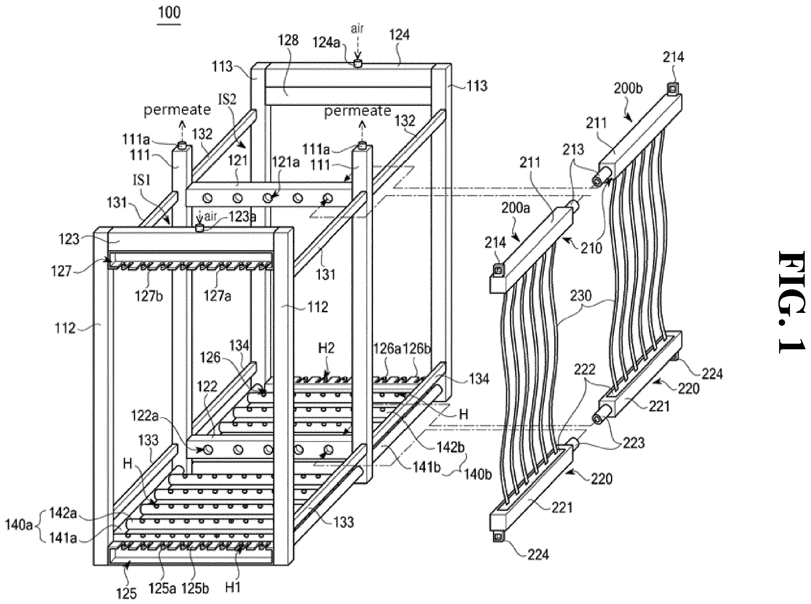

FIG. 1 is a perspective view schematically showing the filtering apparatus according to one embodiment of the present invention.

As illustrated in FIG. 1, the filtering apparatus of the present invention comprises a frame structure 100 including first and second internal spaces IS1 and IS2, a first hollow fiber membrane module 200a installed in the first internal space IS 1, and a second hollow fiber membrane module 200b installed in the second internal space IS2.

Although only a single first hollow fiber membrane module 200a and only a single second hollow fiber membrane module 200b are illustrated in FIG. 1, according to one embodiment of the present invention, a plurality of first hollow fiber membrane modules 200a are arranged in parallel with each other in the first internal space IS1 of the frame structure 100 to form a first group. Likewise, a plurality of second hollow fiber membrane modules 200b are arranged in parallel with each other in the second internal space IS2 of the frame structure 100 to from a second group.

The frame structure 100 comprises a central cross pipe 121 and/or 122 disposed between the first group of hollow fiber membrane modules 200a and the second group of hollow fiber membrane modules 200b. The first and second group of hollow fiber membrane modules 200a and 200b are in fluid communication with the central cross pipe 121 and/or 122. The frame structure 100 may further comprise a central vertical member 111 in fluid communication with the central cross pipe 121 and/or 122. The frame structure 100 may further comprise first and second cross pipes 123 and 124 with the central cross pipe 121 and/or 122 therebetween, first and second vertical members 112 and 113 in fluid communication with the first and second cross pipes 123 and 124 respectively, a first aeration unit 140a which is in fluid communication with the first vertical member 112 and disposed below the first group of hollow fiber membrane modules 200a, and a second aeration unit 140b which is in fluid communication with the second vertical member 113 and disposed below the second group of hollow fiber membrane modules 200b. Hereinafter, such structure of the frame structure 100 will be explained in more detail.

Each of the first and second hollow fiber membrane modules 200a and 200b comprises an upper header 210 of elongated shape having a first water collecting space, a lower header 220 of elongated shape having a second water collecting space, and hollow fiber membranes 230 between the upper and lower headers 210 and 220. The hollow fiber membranes 230 are in fluid communication with the first and second water collecting spaces respectively.

The polymer resin that can be used for manufacturing the hollow fiber membrane 230 comprises at least one of polysulfone resin, polyethersulfone resin, sulfonated polysulfone resin, polyvinylidene fluoride (PVDF) resin, polyacrylonitrile (PAN) resin, polyimide resin, polyamideimide resin, and polyesterimide resin.

The hollow fiber membrane 230 may be a single-layer membrane or a composite membrane. If the hollow fiber membrane 230 is a composite membrane, it may comprise a tubular braid and a polymer thin film coated thereon. The tubular braid may be made of polyester or nylon. The polymer thin film comprises at least one of polysulfone resin, polyethersulfone resin, sulfonated polysulfone resin, polyvinylidene fluoride resin, polyacrylonitrile resin, polyimide resin, polyamideimide resin, and polyesterimide resin.

One end of the hollow fiber membrane 230 is fixed to the body 211 of the upper header 210 through the first fixing layer (not shown), and the other end thereof is fixed to the body 221 of the lower header 220 through the second fixing layer 222.

The lumen of the hollow fiber membrane 230 is in fluid communication with the first and second water collecting spaces of the upper and lower headers 210 and 220. Thus, when negative pressure is supplied to the lumen of the hollow fiber membrane 230, the permeate which has passed through the hollow fiber membrane 230 enters the first and second collecting spaces of the upper and lower headers 210 and 220 via the lumen, and then comes out of them through the first and second outlet pipes 213 and 223.

Alternatively, only one of the upper and lower headers 210 and 220 may have the water collecting space.

Further, each of the first and second hollow fiber membrane modules 200a and 200b may consist of the first header 210 having the first water collecting space and the hollow fiber membranes 230. In this case, one end of the hollow fiber membrane 230 is in fluid communication with the first water collecting space and the other end is sealed.

As illustrated in FIG. 1, the frame structure 100 according to the one embodiment of the present invention comprises vertical members 111, 112 and 113 having longitudinal direction parallel with the hollow fiber membranes 230, and cross pipes 121, 122, 123 and 124 supported by the vertical members 111, 112 and 113 and having longitudinal direction perpendicular to the upper and lower headers 210 and 220 and the hollow fiber membranes 230, respectively.

The vertical members 111, 112 and 113 comprise a pair of central vertical members 111, a pair of first vertical members 112 forming the first internal space IS1 together with the central vertical members 111, and a pair of second vertical members 113 forming the second internal space IS2 together with the central vertical members 111.

The cross pipes 121, 122, 123 and 124 comprise a first central pipe 121 which is supported by the central vertical members 111 and in fluid communication with the upper headers 210 of the first and second hollow fiber membrane modules 200a and 200b, a second central cross pipe 122 which is supported by the central vertical members 111 and in fluid communication with the lower headers 220 of the first and second hollow fiber membrane modules 200a and 200b, a first cross pipe 123 supported by the first vertical members 112, and a second cross pipe 124 supported by the second vertical members 113.

Particularly, the first outlet pipes 213 of the upper headers 210 are inserted into the coupling holes 121a of the first central cross pipe 121 so that the upper headers 210 can be supported by the first central cross pipe 121 and, at the same time, the first water collecting spaces of the upper headers 210 can be in fluid communication with the first central cross pipe 121.

Similarly, the second outlet pipes 223 of the lower headers 220 are inserted into the coupling holes 122a of the second central cross pipe 122 so that the lower headers 220 can be supported by the second central cross pipe 122 and, at the same time, the second water collecting spaces of the lower headers 220 can be in fluid communication with the second central cross pipe 122.

Each of the central vertical members 111 is a pipe in fluid communication with at least one of the first and second central cross pipes 121 and 122 and has an outlet port 111a to send the permeate produced by the first and second hollow fiber membrane modules 200a and 200b to an outside.

According to the aforementioned present invention, a filtering apparatus comprising a plurality of hollow fiber membrane modules 200a and 200b installed in a frame structure 100 with high packing density can be provided. Therefore, the the recover rate of a filtering system in which such filtering apparatuses are submerged in a fluid in a bath with a certain interval therebetween can be remarkably increased.

According to one embodiment of the present invention, each of the central vertical members 111 is a pipe which is in fluid communication with both the first and second central cross pipes 121 and 122. Thus, as the negative pressure is applied to the lumen of the hollow fiber membrane 230, the permeate passing through the hollow fiber membrane 230 is introduced into the first and second water collecting spaces of the upper and lower headers 210 and 220, delivered to the first and second central cross pipes 121 and 122 via the first and second outlet pipes 213 and 223, and then discharged to the outside via the outlet ports 111a of the central vertical members 111.

According to another embodiment of the present invention, one of the two central vertical members 111 (hereinafter, 'first central vertical member') is a pipe which is in fluid communication with the first central cross pipe 121, and the other of the two central vertical members 111 (hereinafter, 'second central vertical member') is a pipe which is in fluid communication with the second central cross pipe 122. Hence, the permeate introduced into the first water collecting spaces of the upper headers 210 of the first and second hollow fiber membrane modules 200a and 200b passes through the first central cross pipe 121 and the first central vertical member sequentially, and then is discharged outside the filtering apparatus. On the other hand, the permeate introduced into the second water collecting spaces of the lower headers 220 of the first and second hollow fiber membrane modules 200a and 200b passes through the second central cross pipe 122 and the second central vertical member sequentially, and then is discharged outside the filtering apparatus.

According to the embodiment described above, since the water pressure applied to the feed water at the lower portion can be exploited for the filtration process, a negative pressure lower than the negative pressure applied to the hollow fiber membrane 230 through the upper header 210 may be applied to the hollow fiber membrane 230 through the lower header 220 without lowering the filtration efficiency, and thus the efficiency of the filtration process can be maximized from the view point of energy.

As illustrated in FIG. 1, the frame structure 100 of the present invention may further comprise a first aeration unit 140a disposed below the first hollow fiber membrane module 200a, and a second aeration unit 140b disposed below the second hollow fiber membrane module 200b.

At least one of the first vertical members 112 is a pipe which is in fluid communication with the first cross pipe 123 and the first aeration unit 140a. At least one of the second vertical members 113 is a pipe which is in fluid communication with the second cross pipe 124 and the second aeration unit 140b. The first and second cross pipes 123 and 124 have inlet ports 123a and 124a respectively to receive the air for aeration cleaning from the outside.

That is, at least one of the first vertical members 112 provides a path for the air to be supplied to the first aeration unit 140a, and at least one of the second vertical members 113 provides a path for the air to be supplied to the second aeration unit 140b.

The first aeration unit 140a may comprise a first intermediate pipe 141a which is in fluid communication with at least one of the first vertical members 112, and a plurality of first aeration tubes 142a. The second aeration unit 140b may comprise a second intermediate pipe 141b which is in fluid communication with at least one of the second vertical members 113, and a plurality of second aeration tubes 142b.

The first and second intermediate pipes 141a and 141b receive the air from the first and second vertical members 112 and 113 with which they are in fluid communication, and then distribute the air to the plurality of first and second aeration tubes 142a and 142b. The air introduced in the first and second aeration tubes 142a and 142b is jetted toward the feed water through the aeration holes H formed on the first and second aeration tubes 142a and 142b, and then removes the contaminants adhered to the surface of the hollow fiber membranes 130 while moving upwardly.

According to such embodiment of the invention, the air for cleaning the first hollow fiber membrane module 200a in the first internal space IS 1 is supplied to the first aeration unit 140a after passing through the first cross pipe 123 and at least one of the first vertical members 112 sequentially. Further, the air for cleaning the second hollow fiber membrane module 200b in the second internal space IS2 is supplied to the second aeration unit 140b after passing through the second cross pipe 124 and at least one of the second vertical members 113 sequentially.

Since the air for cleaning the first and second hollow fiber membrane modules 200a and 200b disposed in the first and second internal spaces IS1 and IS2 respectively is supplied to the first and second aeration units 140a and 140b separately, the aeration cleaning can be performed efficiently even though the hollow fiber membrane modules 200a and 200b are arranged in the frame structure with high packing density.

As illustrated in FIG. 1, the frame structure 100 of the present invention may further comprise horizontal members 131, 132, 133 and 134 having longitudinal direction parallel with the upper and lower headers 210 and 220 of the first and second hollow fiber membrane modules 200a and 200b.

According to one embodiment of the present invention, the horizontal members 131, 132, 133 and 134 comprise first upper horizontal members 131, first lower horizontal members 133, second upper horizontal members 132, and second lower horizontal members 134. The first upper horizontal members 131 and first lower horizontal members 133 are corresponding to the first internal space IS 1, and the second upper horizontal members 132 and second lower horizontal members 134 are corresponding to the second internal space IS2.

Each of the horizontal members 131, 132, 133 and 134 has both ends which are directly combined to one of the first and second vertical members 112 and 113 and one of the central vertical members 111 respectively so that the distance between the first vertical members 112 and central vertical members 111 and the distance between the second vertical members 113 and central vertical members 111 can be kept constantly.

According to one embodiment of the present invention, the distance between the first vertical members 112 and central vertical members 111 and the distance between the second vertical members 113 and central vertical members 111 can be kept constantly by the first and second intermediate pipes 141a and 141b, respectively. In this case, the first and second lower horizontal members 133 and 134 which perform the same function as the first and second intermediate pipes 141a and 141b may be omitted.

As illustrated in FIG. 1, the frame structure 100 of the present invention comprises cross bars 125, 126, 127 and 128. The cross bars 125, 126, 127 and 128 128 comprise a first upper cross bar 127, a first lower cross bar 125, a second upper cross bar 128, and a second lower cross bar 126. The upper and lower headers 210 and 220 of the first hollow fiber membrane module 200a are coupled to the first upper cross bar 127 and first lower cross bar 125 respectively. The upper and lower headers 210 and 220 of the the second hollow fiber membrane module 200b are coupled to the second upper cross bar 128 and second lower cross bar 126 respectively.

The first and second hollow fiber membrane modules 200a and 200b are installed in the frame structure 100 in such a manner that the longitudinal direction of the upper and lower headers 210 and 220 and the longitudinal direction of the hollow fiber membranes 230 are perpendicular to the longitudinal direction of the cross bars 125, 126, 127 and 128.

If the first and second hollow fiber membrane modules 200a and 200b include only the upper headers 210 having the first water collecting spaces and the hollow fiber membranes 230, one ends of the hollow fiber membranes 230 are in fluid communication with the first water collecting spaces, the other ends are sealed, and it is possible to omit the first and second lower cross bars 125 and 126.

The first and second upper cross bars 127 and 128 may be combined to the lower portions of the first and second cross pipes 123 and 124 respectively. Alternatively, it is possible to combine the first upper cross bar 127 directly to the first vertical members 112, and the second upper cross bar 128 directly to the second vertical members 113.

The first and second upper cross bars 127 and 128 comprise first and second ribs 127a respectively. Each of the upper headers 210 of the first and second hollow fiber membrane modules 200a and 200b comprises a first ring member 214 at its one end. The first ring member 214 is located opposite to the first outlet pipe 213. The first and second ribs 127a of the first and second upper cross bars 127 and 128 are inserted into the first ring members 214 of the first and second hollow fiber membrane modules 200a and 200b respectively so that the upper headers 210 of the first and second hollow fiber membrane modules 200a and 200b are coupled to the first and second upper cross bars 127 and 128 respectively.

The first lower cross bar 125 is directly coupled to the first vertical members 112, and the second lower cross bar 126 is directly coupled to the second vertical members 113.

The first and second lower cross bars 125 and 126 comprise first and second ribs 125a and 126a respectively. Each of the lower headers 220 of the first and second hollow fiber membrane modules 200a and 200b comprises a second ring member 224 at its one end. The second ring member 224 is located opposite to the second outlet pipe 223. The first and second ribs 125a and 126a of the first and second lower cross bars 125 and 126 are inserted into the second ring members 224 of the first and second hollow fiber membrane modules 200a and 200b respectively so that the lower headers 220 of the first and second hollow fiber membrane modules 200a and 200b are coupled to the first and second lower cross bars 125 and 126 respectively.

According to one embodiment of the present invention, the first and second hollow fiber membrane modules 200a and 200b are installed in the frame structure 100 by inserting the first and second outlet pipes 213 and 223 of the upper and lower headers 210 and 220 of the first and second hollow fiber membrane modules 200a and 200b into the coupling holes 121a and 122a of the first and second central cross pipes 121 and 122 respectively and coupling the first and second ring members 214 and 224 of the upper and lower headers 210 and 220 to the cross bars 125, 126, 127 and 128 respectively.

The filtering apparatus according to one embodiment of the present invention further comprises first to fourth stoppers 300 which are coupled respectively to the first and second ribs 125a, 126a and 127a passing through the first and second ring members 214 and 224 of the first and second hollow fiber membrane modules 200a and 200b so as to prevent the first and second hollow fiber membrane modules 200a and 200b from being separated from the frame structure 100.

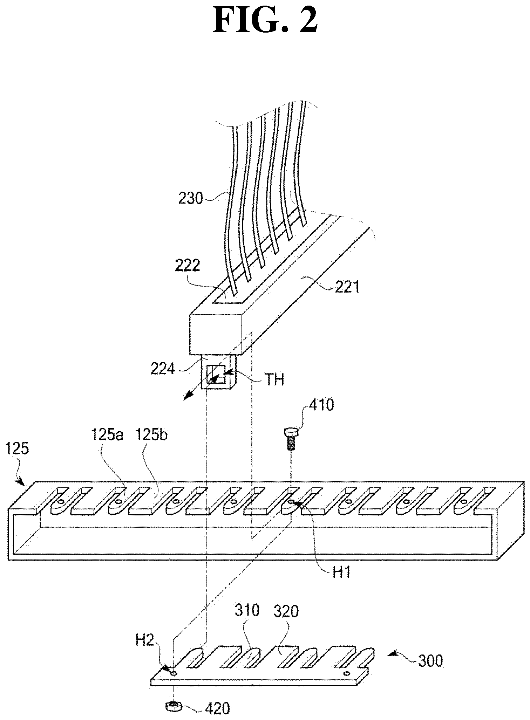

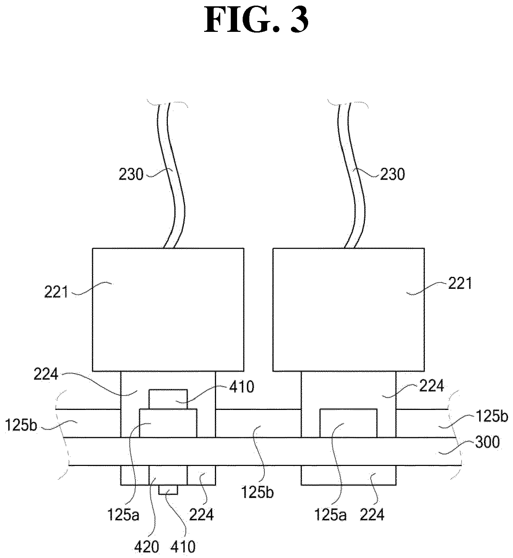

Hereinafter, referring to FIG. 2 and FIG. 3, the way how the lower header 220 of the first hollow fiber membrane module 200a is coupled to the first lower cross bar 125 of the frame structure 100 according to one embodiment of the invention will be described in detail.

As illustrated in FIG. 2, the first lower cross bar 125 comprises the first rib 125a protruding in longitudinal direction of the lower header 220 of the first hollow fiber membrane module 200a, and the lower header 220 comprises the second ring member 224 formed at the portion opposite to the second outlet pipe 223 and on the side opposite to the second fixing layer 222.

The second ring member 224 of the lower header 220 has a through-hole TH. When the first hollow fiber membrane module 200a is installed in the frame structure 100, the first rib 125a of the first lower cross bar 125 is inserted into the through-hole TH of the second ring member 224.

The stopper 300 is coupled to a portion of the first rib 125a which has passed through the through-hole TH of the second ring member 224 so as to prevent the first hollow fiber membrane module 200a (more particularly, the lower header 220) from being separated from the frame structure 100 (more particularly, the first lower cross bar 125).

According to one embodiment of the present invention, as illustrated in FIG. 2, a first hole H1 is formed on the portion of the first rib 125a of the first lower cross bar 125 passing through the through-hole TH of the second ring member 224 of the lower header 220, and the stopper 300 has a second hole H2 corresponding to the first hole H1. The stopper 300 and the first rib 125a of the first lower cross bar 125 are coupled with each other by means of a bolt 410 and a nut 420, the bolt 410 passing through the first and second holes H1 and H2.

The stopper 300 may further comprise an auxiliary rib 310 to be inserted into the through-hole TH of the second ring member 224 of the lower header 220.

The size of the through-hole TH of the second ring member 224 of the lower header 220 is so large that the first rib 125a of the first lower cross bar 125 can be easily inserted thereinto and, subsequent to the first rib 125a, the auxiliary rib 310 of the stopper 300 is inserted into the through-hole TH of the second ring member 224 so that the first rib 125a of the first lower cross bar 125 can be maintained tightly in the through-hole TH of the second ring member 224 of the lower header 220. Consequently, the relative vibration of the first hollow fiber membrane module 200a within the frame structure 100, which would otherwise occur during the aeration cleaning process, can be minimized.

Furthermore, since not only the first rib 125a but also the auxiliary rib 310 are inserted into the through-hole TH of the second ring member 224, the power applied to the second ring member 224 of the lower header 220 of the first hollow fiber membrane module 200a during the aeration cleaning process can be dispersed to the first rib 125a and auxiliary rib 310.

Consequently, according to the present invention, the durability of the filtering apparatus can be improved, and both the damage of the hollow fiber membrane module and the separation of the hollow fiber membrane module from the frame structure can be prevented.

Optionally, the second ring member 224 may comprise an elastic member (not shown) capable of pressurizing the auxiliary rib 310 toward the first rib 125a while the ribs 125a and 310 are inserted therein so as to maintain the first rib 125a of the first lower cross bar 125 more tightly in the through-hole TH of the second ring member 224 of the lower header 220.

Since the filtering apparatus according to one embodiment of the invention comprises a plurality of first hollow fiber membrane modules 200a and a plurality of second hollow fiber membrane modules 200b installed in the frame structure 100, the cross bars 125, 126, 127 and 128 of the frame structure 100 comprise a plurality of first and second ribs 125a, 126a and 127a respectively.

The upper and lower headers 210 and 220 of the plurality of first and second hollow fiber membrane modules 200a and 200b comprise the first and second ring members 214 and 224 having the through-hole TH respectively, and each of the first and second ribs 125a, 126a and 127a is inserted into the corresponding through-hole TH of the first or second ring member 214 or 224.

For the convenience in installing the first and second hollow fiber membrane modules 200a and 200b in the frame structure 100, each of the stoppers 300 may be coupled to at least two of the first ribs 125a and 127a or at least two of the second ribs 126a passing through the through-holes TH of the ring members 214 or 224.

Further, as shown in FIG. 2, each stopper 300 may comprise a plurality of auxiliary ribs 310, and the auxiliary ribs 310 may be inserted into the first and second ring members 214 and 224 corresponding thereto respectively together with the first and second ribs 125a, 126a and 127a of the cross bars 125, 126, 127 and 128.

According to one embodiment of the present invention, the first and second upper cross bars 127 and 128 further comprise a first protrusion 127b between the first ribs 127a and a second protrusion between the second ribs (not shown) respectively, and the first and second lower cross bars 125 and 126 further comprise a first protrusion (125b) between the first ribs 125a and a second protrusion 126b between the second ribs 126a respectively.

Owing to the first and second protrusions 125b, 126b and 127b, the power applied to the ring members 214 and 224 during the aeration cleaning process can be dispersed to the ribs 125a, 126a and 127a, auxiliary ribs 310, and protrusions 125b, 126b and 127b, thereby improving the durability of the filtering apparatus.

Further, as illustrated in FIG. 2, each stopper 300 may further comprise an auxiliary protrusion(s) 320 between the auxiliary ribs 310.

Owing to the auxiliary protrusion(s) 320, the power applied to the ring members 214 and 224 during the aeration cleaning process can be further dispersed to the ribs 125a, 126a and 127a, auxiliary ribs 310, protrusions 125b, 126b and 127b, and auxiliary protrusion(s) 320, thereby further improving the durability of the filtering apparatus.

According to the aforementioned present invention, the relative vibration of the hollow fiber membrane modules 200a and 200b within the frame structure 100 which would otherwise occur during the aeration cleaning process can be minimized, and thus both the damage of the hollow fiber membrane modules 200a and 200b and the separation of the hollow fiber membrane modules 200a and 200b from the frame structure 100 both of which could be caused by the relative vibration can be prevented.

## Claims

1. A filtering apparatus comprising:
a frame structure including first and second internal spaces;
a first hollow fiber membrane module installed in the first internal space;
and
a second hollow fiber membrane module installed in the second internal space,
wherein each of the first and second hollow fiber membrane modules comprises:
an upper header;
a lower header; and
a hollow fiber membrane between the upper and lower headers,
the frame structure comprises:
vertical members having longitudinal direction parallel with the hollow fiber membrane; and
cross pipes supported by the vertical members, the cross pipes having longitudinal direction perpendicular to the upper and lower headers and the hollow fiber membrane respectively,
the vertical members comprises:
a pair of central vertical members;
a pair of first vertical members forming the first internal space together with the central vertical members; and
a pair of second vertical members forming the second internal space together with the central vertical members,
the cross pipes comprises:
a first central cross pipe supported by the central vertical members, the first central cross pipe being in fluid communication with the upper headers of the first and second hollow fiber membrane modules; and
a second central cross pipe supported by the central vertical members, the second central cross pipe being in fluid communication with the lower headers of the first and second hollow fiber membrane modules, and
each of the central vertical members is a pipe in fluid communication with at least one of the first and second central cross pipes and has an outlet port to send a permeate produced by the first and second hollow fiber membrane modules to an outside.

2. The filtering apparatus of claim 1, wherein one of the central vertical members is a pipe in fluid communication only with the first central cross pipe, and
the other of the central vertical members is a pipe in fluid communication only with the second central cross pipe.

3. The filtering apparatus of claim 1, wherein the frame structure further comprises:
a first aeration unit disposed below the first hollow fiber membrane module;
and
a second aeration unit disposed below the second hollow fiber membrane module,
the cross pipes further comprises:
a first cross pipe supported by the first vertical members; and
a second cross pipe supported by the second vertical members,
at least one of the first vertical members is a pipe in fluid communication with the first cross pipe and the first aeration unit,
at least one of the second vertical members is a pipe in fluid communication with the second cross pipe and the second aeration unit, and
each of the first and second cross pipes has an inlet port to receive an air for aeration cleaning from an outside.

4. The filtering apparatus of claim 1, wherein the frame structure further comprises:
a first upper cross bar supported by the first vertical members; and
a second upper cross bar supported by the second vertical members,
the first and second upper cross bars include first and second ribs, respectively,
each of the upper headers of the first and second hollow fiber membrane modules has a first ring member at one end thereof,
the filtering apparatus further comprises first and second stoppers, and
the first and second ribs passing through the first ring members of the first and second hollow fiber membranes are coupled to the first and second stoppers, respectively, so that the first and second hollow fiber membranes can be prevented from being separated from the frame structure.

5. The filtering apparatus of claim 4, wherein the first and second stoppers comprise first and second auxiliary ribs, respectively, the first and second auxiliary ribs inserted into the first ring members, respectively.

6. The filtering apparatus of claim 4, wherein portions of the first and second ribs passing through the first ring members respectively are coupled to the first and second stoppers respectively by means of bolts and nuts.

7. The filtering apparatus of claim 6, wherein the first and second upper cross bars comprise a plurality of the first ribs and a plurality of the second ribs, respectively,
the filtering apparatus comprises a plurality of the first hollow fiber membrane modules and a plurality of the second hollow fiber membrane modules,
each of the first and second ribs is inserted into the first ring member corresponding thereto,
the first stopper is coupled to at least two of the first ribs, and
the second stopper is coupled to at least two of the second ribs.

8. The filtering apparatus of claim 7, wherein the first and second stoppers comprise a plurality of first auxiliary ribs and a plurality of second auxiliary ribs, respectively, and
each of the first and second auxiliary ribs is inserted into the first ring member corresponding thereto.

9. The filtering apparatus of claim 8, wherein the first and second upper cross bars further comprise a first protrusion between the first ribs and a second protrusion between the second ribs, respectively, and
the first and second stoppers further comprise a first auxiliary protrusion between the first auxiliary ribs and a second auxiliary protrusions between the second auxiliary ribs, respectively.

10. A filtering apparatus comprising:
a frame structure;
a first group of hollow fiber membrane modules arranged in parallel with each other in the frame structure; and
a second group of hollow fiber membrane modules arranged in parallel with each other in the frame structure,
wherein the frame structure comprises a central cross pipe disposed between the first group of hollow fiber membrane modules and the second group of hollow fiber membrane modules, and
the first and second groups of hollow fiber membrane modules are in fluid communication with the central cross pipe.

11. The filtering apparatus of claim 10, wherein the frame structure further comprises a central vertical member in fluid communication with the central cross pipe.

12. The filtering apparatus of claim 10, wherein the frame structure further comprises:
first and second cross pipes with the central cross pipe therebetween;
first and second vertical members in fluid communication with the first and second cross pipes, respectively;
a first aeration unit in fluid communication with the first vertical member, the first aeration unit disposed below the first group of hollow fiber membrane modules; and
a second aeration unit in fluid communication with the second vertical member, the second aeration unit disposed below the second group of hollow fiber membrane modules.
